(19) Europäisches Patentamt / European Patent Office / Office européen des brevets

(11) **EP 2 539 117 B1**

(12) **EUROPÄISCHE PATENTSCHRIFT**

(45) Veröffentlichungstag und Bekanntmachung des Hinweises auf die Patenterteilung:
**06.03.2019  Patentblatt 2019/10**

(51) Int Cl.:
**G01B 11/275** *(2006.01)*    **G01B 11/14** *(2006.01)*

(21) Anmeldenummer: **11700517.3**

(22) Anmeldetag: **04.01.2011**

(86) Internationale Anmeldenummer:
**PCT/EP2011/050045**

(87) Internationale Veröffentlichungsnummer:
**WO 2011/104041 (01.09.2011 Gazette 2011/35)**

(54) **VERFAHREN UND VORRICHTUNG ZUM BESTIMMEN VON ABSTÄNDEN AN EINEM FAHRZEUG**

METHOD AND DEVICE FOR DETERMINING DISTANCES ON A VEHICLE

PROCÉDÉ ET DISPOSITIF POUR DÉTERMINER DES DISTANCES SUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2010  DE 102010002258**

(43) Veröffentlichungstag der Anmeldung:
**02.01.2013  Patentblatt 2013/01**

(73) Patentinhaber: **Robert Bosch GmbH**
**70442 Stuttgart (DE)**

(72) Erfinder:
• **SEIFERT, Wolfgang**
**82407 Wielenbach (DE)**
• **ABRAHAM, Steffen**
**31134 Hildesheim (DE)**
• **WENDT, Axel**
**31134 Hildesheim (DE)**

(74) Vertreter: **Schmitt-Nilson Schraud Waibel Wohlfrom**
**Patentanwälte Partnerschaft mbB**
**Pelkovenstraße 143**
**80992 München (DE)**

(56) Entgegenhaltungen:
| | |
|---|---|
| **EP-A2- 1 505 367** | **WO-A1-2008/028832** |
| **WO-A1-2008/046715** | **DE-A1-102004 013 441** |
| **DE-A1-102006 048 726** | **DE-A1-102007 021 328** |
| **DE-A1-102008 042 145** | |

EP 2 539 117 B1

**Beschreibung**

Die vorliegende Erfindung betrifft ein Verfahren zum Bestimmen von Abständen und insbesondere Höhenständen zur Fahrwerksvermessung eines Kraft-Fahrzeugs sowie ein Fahrwerksvermessungsvorrichtung zur Durchführung des erfindungsgemäßen Verfahrens.

Stand der Technik

Berührungslose Achsvermessung, wie sie bspw. aus DE 10 2004 013 441 bekannt ist, basiert auf dem Erkennen eines Geometriedetails einer Radfelge, der Auswertung bzgl. der Lage im Raum und der Zusammenführung der Ergebnisse zu einer Achsvermessung.
Neben den reinen Messwerten, welche die Stellung der Radfelgen zueinander beschreiben, sind für eine Auswertung, die beispielsweise einen Soll-/Istvergleich umfasst, fahrzeugspezifische Vorgabewerte erforderlich, bspw. die Konstruktionslage oder ein zulässiger Bereich des Höhenstandes, der vom Fahrzeughersteller vorgegeben ist. Der Höhenstand wird dabei von verschiedenen Fahrzeugherstellern unterschiedlich definiert. Gemäß einer Definition wird der Höhenstand als Höhendifferenz zwischen der Radhausoberkante und der Felgenoberkante definiert. Andere Definitionen betrachten bspw. das Niveau an einem Element der Radaufhängung oder die Höhendifferenz zwischen der Aufstandfläche und einem Karosseriemerkmal.
Abhängig von unterschiedlichen Beladungszuständen eines Fahrzeugs ergeben sich unterschiedliche Höhenstände und somit auch unterschiedliche Einfederwege für ein und denselben Fahrzeugtyp. Basierend auf unterschiedlichen Einfederwegen ergeben sich bei ein und demselben Fahrzeug unterschiedliche Ergebnisse der Fahrwerksvermessung, z.B. unterschiedliche Spur- und Sturzwerte.
Herkömmlicherweise wird der Höhenstand eines Fahrzeugs unter Zuhilfenahme mechanischer Hilfsmittel vermessen, indem Abstände von festgelegten Punkten am Fahrzeug und der Aufstandsfläche vermessen und die gemessenen Werte von Hand protokolliert und in einen Rechner der Fahrwerksvermessungseinrichtung eingegeben werden. Alternativ werden die Abstände mit einem Sonderwerkzeug gemessen und über eine Schnittstelle an den Rechner übertragen.
Dies ist umständlich, langwierig und fehleranfällig. Zudem wird eine genaue Vermessung dadurch erschwert, dass die zu vemessenden Merkmalspunkte häufig nicht oder nur schwierig direkt mechanisch angetastet werden können.
WO 2008/028832 A1 beschreibt ein Verfahren zum Bestimmen von Abständen zur Fahrwerksvermessung bei dem zunächst jeweils ein Bild einer Radfelge und wenigstens eines benachbart zu der Radfelge liegenden Bereichs durch wenigstens zwei Messkameras eines Messgeräts aufgenommen werden. In den beiden aufgenommenen Bildern einer Radfelge wird dann wenigstens ein erster Raumpunkt bestimmt und dessen Position durch Triangulation berechnet. Anschließend wird in den beiden aufgenommenen Bildern wenigstens ein zweiter Raumpunkt bestimmt und dessen Position durch Triangulation berechnet. Danach wird der Abstand oder die Höhendifferenz zwischen den zwei Raumpunkten bestimmt. Aus dem Abstand bzw. der Höhendifferenz lässt sich direkt oder indirekt der Höhenstand des Fahrzeugs bestimmen, ohne dass mechanische Hilfsmittel zu Hilfe genommen werden müssen.

Offenbarung der Erfindung

Es ist eine Aufgabe der vorliegenden Erfindung, ein Verfahren sowie eine Vorrichtung zum Bestimmen von Abständen zur Fahrwerksvermessung von Fahrzeugen anzugeben, die zuverlässige Ergebnisse mit hoher Genauigkeit liefern.
In einem erfindungsgemäßen Verfahren zum Bestimmen von Abständen zur Fahrwerksvermessung eines Fahrzeugs mit einer Karosserie und wenigstens einem Rad, insbesondere zum Bestimmen eines Höhenstands, wird ein strukturiertes Lichtmuster auf das Rad und einen das Rad umgebenden Bereich der Karosserie projiziert, ein von dem Rad reflektiertes Lichtmuster mit einer bildgebenden Sensorik aufgenommen und aus dem reflektierten Lichtmuster eine 3D-Punktwolke bestimmt. An die 3D-Punktwolke wird ein parametrisches Oberflächenmodell des Rades angepasst und der Radnormalenvektor wird für verschiedene Drehlagen des Rades berechnet. Die Drehachse und das Raddrehzentrum werden aus der räumlichen Bewegung des Radnormalenvektors bestimmt. Durch Auswerten der zuvor bestimmten 3D-Punktwolke wird zusätzlich ein Punkt auf der Karosserie des Fahrzeugs bestimmt. Der Höhenstand wird als vertikaler Abstand zwischen dem Raddrehzentrum und dem Punkt auf der Karosserie bestimmt.
Die Erfindung umfasst auch eine Vorrichtung zum Bestimmen von Abständen zur Fahrwerksvermessung eines Fahrzeugs mit einer Karosserie und wenigstens einem Rad, insbesondere zum Bestimmen eines Höhenstands, wobei die Vorrichtung wenigstens einen Projektor, der eingerichtet ist, ein strukturiertes Lichtmuster auf wenigstens ein Rad des Fahrzeugs und auf einen das Rad umgebenden Bereich der Karosserie zu projizieren; wenigstens eine bildgebende Sensorik, die ausgebildet ist, um ein Lichtmuster aufzunehmen, das von dem Rad und einem das Rad umgebenden Bereich der Karosserie reflektiert wird; und wenigstens einen Rechner umfasst. Der Rechner ist ausgebildet, aus dem reflektierten Lichtmuster eine 3D-Punktwolke zu bestimmen, ein parametrisches Oberflächenmodell des Rades an die 3D-Punktwolke anzupassen, Radnormalenvektoren für verschiedene Drehlagen des Rades zu berechnen; die Drehachse und damit des Raddrehzentrums aus der räumlichen Bewegung des Radnormalenvektors zu berechnen; durch Auswerten der 3D-Punktwolke einen Punkt auf der Karosserie zu bestimmen und den Höhenstand als vertikalen Abstand zwischen dem Raddrehzentrum und dem Punkt auf der Karosserie zu bestimmen.

Durch die Bestimmung des Raddrehzentrums und eines Punktes auf der Karosserie aus einer 3D-Punktwolke werden die Zuverlässigkeit und die Genauigkeit des Verfahrens verbessert. Insbesondere können die Positionen der zur Vermessung verwendeten Punkte genauer als in herkömmlichen Verfahren bestimmt werden.

In einer Ausführungsform schließt der Schritt des Bestimmens eines Punktes auf der Karosserie durch Auswerten der 3D-Punktwolke das Lokalisieren einer Kante der Karosserie in der 3D-Punktwolke ein.

Die Erfindung betrifft auch ein Verfahren zum Bestimmen von Abständen zur Fahrwerksvermessung eines Fahrzeugs mit einer Karosserie und wenigstens einem Rad, insbesondere zum Bestimmen eines Höhenstands, wobei das Raddrehzentrum eines Rades des Fahrzeugs durch Projizieren eines strukturierten Lichtmusters zumindest auf das Rad; Aufnehmen eines von dem Rad reflektierten Lichtmusters mit einer bildgebenden Sensorik; Bestimmen einer 3D-Punktwolke aus dem reflektierten Lichtmusters; Anpassen eines parametrischen Oberflächenmodell des Rades an die 3D-Punktwolke; Berechnen von Radnormalenvektoren für verschiedene Drehlagen des Rades und Berechnen der Drehachse und damit des Raddrehzentrums aus der räumlichen Bewegung des Radnormalenvektors bestimmt wird. Ein Punkt auf der Karosserie wird durch Beleuchten des Fahrzeugs mit einer unstrukturierten Beleuchtung; Vorbeifahren des Fahrzeugs an wenigstens einer Sensoranordnung mit zwei (stereo) oder mehr bildgebenden Sensoren; Aufnehmen einer Anzahl von Grauwertbildern während der Vorbeifahrt des Fahrzeugs an der wenigstens einen Sensoranordnung und Auswerten der Grauwertbilder bestimmt. Der Höhenstand ergibt sich als der vertikale Abstand zwischen dem Raddrehzentrum und dem Punkt auf der Karosserie. In einer Ausführungsform können die zur Aufnahme des strukturierten Lichtmusters vorgesehenen bildgebenden Sensoren auch zur Aufnahme der Grauwertbilder verwendet werden.

Die Erfindung umfasst auch eine Vorrichtung zum Bestimmen von Abständen zur Fahrwerksvermessung eines Fahrzeugs mit einer Karosserie und wenigstens einem Rad, insbesondere zum Bestimmen eines Höhenstands, wobei die Vorrichtung wenigstens einen Projektor, der eingerichtet ist, ein strukturiertes Lichtmuster auf wenigstens ein Rad des Fahrzeugs und einen das Rad umgebenden Bereich der Karosserie zu projizieren; wenigstens eine bildgebende Sensorik, die ausgebildet ist, um ein von dem Rad und dem das Rad umgebenden Bereich der Karosserie reflektiertes Lichtmuster aufzunehmen; wenigstens eine Anordnung von zwei (Stereo-Kamera) oder mehr bildgebenden Sensoren, die ausgebildet ist, um während der Vorbeifahrt des Fahrzeugs eine Anzahl von Grauwertbildern aufzunehmen; und wenigstens einen Rechner umfasst. Der Rechner ist eingerichtet, um aus dem reflektierten Lichtmuster eine 3D-Punktwolke zu bestimmen, ein parametrisches Oberflächenmodell des Rades an die 3D-Punktwolke anzupassen, Radnormalenvektoren für verschiedene Drehlagen des Rades zu berechnen, die Drehachse und damit das Raddrehzentrum aus der räumlichen Bewegung des Radnormalenvektors zu bestimmen; durch Auswerten der Grauwertbilder wenigstens einen Punkt auf der Karosserie zu bestimmen; und den Höhenstand als vertikaler Abstand zwischen dem Raddrehzentrum und dem Punkt auf der Karosserie zu bestimmen.

Durch die Bestimmung des Raddrehzentrums aus einer 3D-Punktwolke werden die Zuverlässigkeit und die Genauigkeit des Verfahrens erhöht. Insbesondere kann die Position des Raddrehzentrums genauer als in Verfahren, die auf der Auswertung von Stereo-Bildern der Felge beruhen, bestimmt werden. Durch die Aufnahme und Auswertung mehrerer Grauwertbilder kann ein Punkt auf der Karosserie besonders genau bestimmt werden. Die Aufnahme der Grauwertbilder kann während der Fahrt des Fahrzeugs auf den Messplatz erfolgen, wodurch das Verfahren beschleunigt und ein Einfedern des Fahrwerks, wie es z.B. beim Überfahren eines Hindernisses auftritt und das zu einer Verfälschung der Messung führen kann, zuverlässig erkannt werden kann.

In einer Ausführungsform schließt die Bestimmung des Höhenstandes die Mittlung des Höhenstandes über mehrere Stereo-Grauwertbilder ein. Dadurch kann der Höhenstand besonders genau bestimmt werden. Werte, die besonders stark vom Mittelwert abweichen, können als Ausreißer erkannt und von der weiteren Auswertung ausgeschlossen werden.

In einer Ausführungsform schließt die Auswertung der Grauwertbilder eine Kantenerkennung, z.B. mit dem Canny-Edge-Filter, ein. Durch eine solche Kantenerkennung können die Grauwertbilder besonders effektiv und genau ausgewertet werden.

In einer Ausführungsform schließt die Auswertung der Grauwertbilder eine Stereo-Korrespondenzzuordnung der Kanten, 3D-Triangulation und Klassifikation einer Radhausunterkante in den 3D-Konturen ein. Durch eine solche Auswertung können die Grauwertbilder besonders effektiv und genau ausgewertet werden. Alternativ oder zusätzlich kann ein Punkt auf der Karosserie durch Beleuchten des Fahrzeugs mit einer unstrukturierten Beleuchtung, Vorbeifahren des Fahrzeugs an wenigstens einer Stereo-Kamera, Aufnehmen einer Anzahl von Stereo-Grauwertbildern während der Vorbeifahrt des Fahrzeugs an der wenigstens einer Stereo-Kamera und Auswerten der Stereo-Grauwertbilder bestimmt werden.

In einer Ausführungsform schließt die Auswertung der Grauwertbilder eine Disparitätsmessung mittels Stereo-Verfahren ein. Eine solche Disparitätsmessung ermöglicht eine besonders effektive und genaue Auswertung der Grauwertbilder.

In einer Ausführungsform schließt die Auswertung die Erzeugung einer 3D-Punktwolke aus der Disparitätsmessung ein.

In einer Ausführungsform schließt das Verfahren zunächst die Bestimmung eines Punktes auf der Karosserie durch Auswerten der 3D-Punktwolke ein, wobei zusätzlich eine Bestimmung des Punktes auf der Karosserie durch die Auswertung von wenigstens zwei Grauwertbildern durchgeführt wird. Durch die Kombination der Auswertung der 3D-Punktwolke mit der Auswertung der Grauwertbilder zur Bestimmung eines Punktes auf der Karosserie wird die Robustheit des Verfahrens erhöht. Zusätzlich wird auch die Genauigkeit verbessert, da Fehler, die bei der Auswertung der 3D-Punktwolke auftreten, durch Auswerten der Grauwertbilder zumindest teilweise ausgeglichen werden können und umgekehrt.

In einer Ausführungsform schließt das Verfahren ein, einen Punkt auf der Karosserie zunächst durch Auswerten der 3D-Punktwolke zu bestimmen und die Auswertung von wenigstens zwei Grauwertbildern zur Bestimmung des Punktes auf der Karosserie nur dann durchzuführen, wenn der Punkt auf der Karosserie durch Auswerten der 3D-Punktwolke nicht oder zumindest nicht mit hinreichender Genauigkeit bestimmbar ist. Dadurch wird die Robustheit des Verfahrens erhöht; insbesondere kann das Verfahren auch dann durchgeführt werden, wenn ein Punkt auf der Karosserie durch Auswerten der 3D-Punktwolke nicht mit hinreichender Genauigkeit bestimmbar ist.

Die Erfindung wird im Folgenden anhand der beiliegenden Figuren näher beschrieben:

Fig. 1 zeigt schematisch eine erfindungsgemäße Messvorrichtung;

Fig. 2 zeigt eine mit einer Messvorrichtung gemäß der Fig. 1 aufgenommene 3D-Punktwolke eines Rades und dessen Umgebung;

Fig. 3a zeigt die 3D-Punktwolke aus Fig. 2 ohne die zum Rad gehörenden Punkte;

Fig. 3b zeigt einen vergrößerten Ausschnitt der in Fig. 3a gezeigten 3D-Punktwolke;

Fig. 3c zeigt die in Fig. 3a gezeigte 3D-Punktwolke mit dem daraus ermittelten Höhenstand;

Fig. 4 zeigt schematisch die Unterteilung eines zweidimensionalen Schnitts durch die 3D-Punktwolke in mehrere Segmente;

Fig. 5 zeigt die Häufigkeit der Punkte in der 3D-Punktwolke als Funktion des Abstandes vom Radzentrum;

Fig. 6 zeigt schematisch die Ermittelung des Höhenstandes in einem Grauwertbild;

Fig. 7 zeigt schematisch den Ablauf zur Bestimmung der Radhausunterkante unter Nutzung eines Stereo-Grauwertbildpaares;

Fig. 8a und 8b zeigen schematisch ein Paar Stereo-Grauwertbilder;

Fig. 9a und 9b zeigen schematisch die Canny-Edge-Konturen in den Grauwertbildern aus den Fig. 8a und 8b;

Fig. 10a und 10b zeigen schematisch die in den Grauwertbildern ermittelten Konturkanten;

Fig. 11a und 11b zeigen schematisch die aus den in den Fig. 10a und 10b gezeigten Konturkanten ausgewählte Radhausunterkante;

Fig. 12 zeigt schematsich die Durchführung einer Höhenstandsmessung während das Fahrzeug auf die Messstelle gefahren wird.

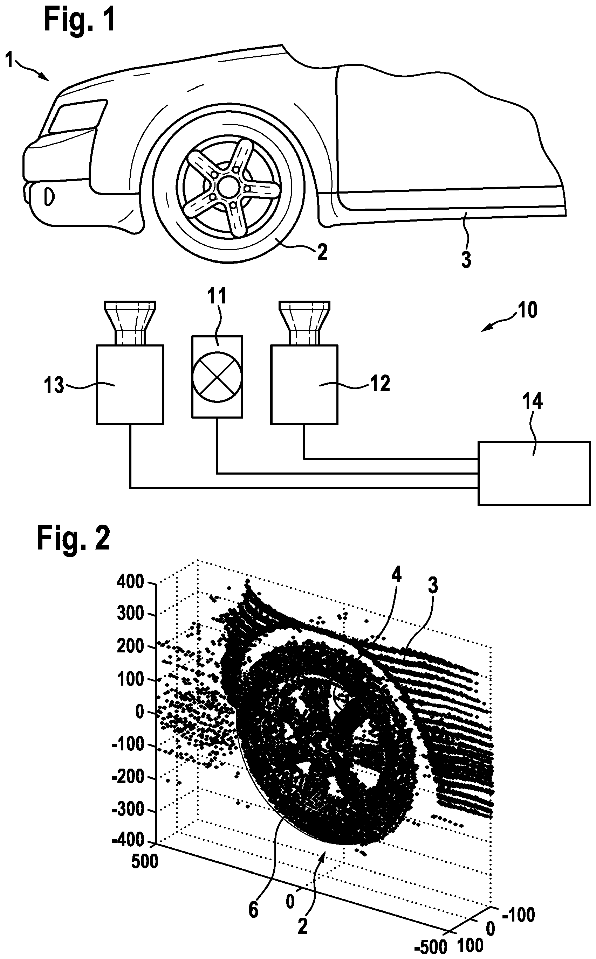

Fig. 1 zeigt ein Ausführungsbeispiel einer erfindungsgemäßen Messvorrichtung 10, an der ein Fahrzeug 1 vorbei bewegt werden kann. Außer einem Rad 2 des Fahrzeugs 1 wird auch die Karosserie 3 des Fahrzeugs 1, vorzugsweise in der Umgebung des Rades 2, in die Messung miteinbezogen.

Die Messvorrichtung 10 weist eine Projektionseinrichtung 11 für ein Lichtmuster, zwei in vorgegebener räumlicher Lage und Richtung zur Projektionseinrichtung 11 angeordnete kalibrierte bildgebende Sensoreinheiten 12, 13 sowie eine Steuer- und Auswerteinheit 14 auf, die zur Datenübertragung mit der Projektionseinrichtung 11 und den in Stereoanordnung positionierten bildgebenden Sensoreinheiten 12, 13 verbunden ist und elektronische Einrichtungen für die Steuerung der Projektionseinrichtung 11, der bildgebenden Sensoreinheiten 12, 13 und Komponenten für eine Auswertung der von den Sensoreinheiten 12, 13 ausgegebenen Daten und die Darstellung der Messergebnisse aufweist. Sollen auch Grauwertbilder aufgenommen werden, so kann zusätzlich eine (in der Fig. 1 nicht gezeigte) diffuse Beleuchtungseinrichtung vorgesehen sein, um die Qualität der Grauwertbilder zu verbessern.

Fig. 2 zeigt beispielhaft eine mit einer Messeinrichtung gemäß der Fig. 1 aufgenommene 3D-Punktwolke eines Rades 2 mit einer Felge 4 und einem die Felge 4 umgebenden Reifen 6. Weiterhin umfasst die in der Fig. 2 gezeigte Punktwolke einen Bereich der Karosserie 3, insb. einen Bereich der Karosserie 3 in der Umgebung des Rades 2.

Aus der 3D-Punktwolke sind, z.B. mit Hilfe des in WO 2008/046715 A1 beschriebenen Verfahrens, die Drehachse des Rades 2 und insbesondere das Raddrehzentrum Z bestimmbar. Eine solche Bestimmung des Raddrehzentrums Z aus der 3D-Punktwolke ist robuster als eine Zentrumsschätzung mit Hilfe von bei unstrukturierter Beleuchtung aufgenommenen Bildern der Felge 4, wie sie aus WO 2008/028832 A1 bekannt ist. Die Bestimmung des Raddrehzentrums Z aus der 3D-Punktwolke kann insbesondere in die Messsoftware zur berührungslosen Achsvermessung integriert sein.

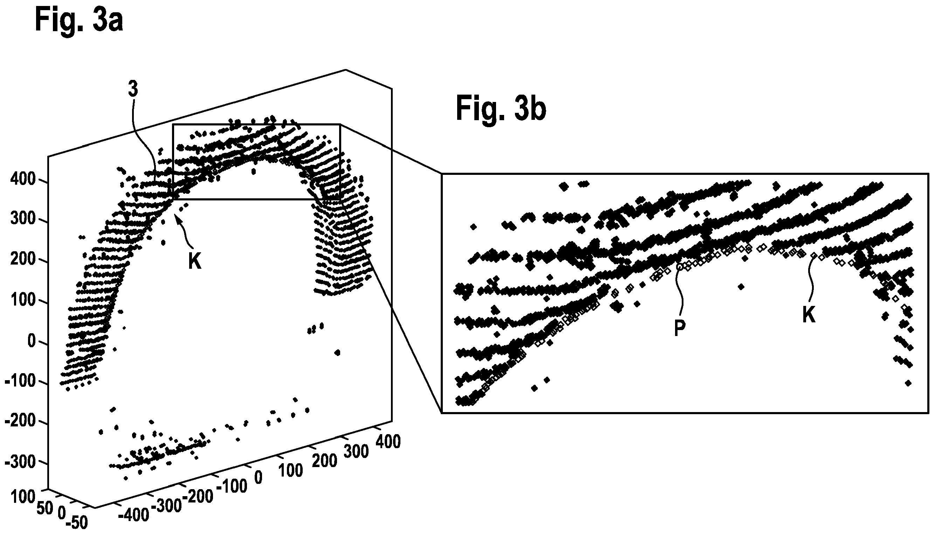

Fig. 3a zeigt die 3D-Punktwolke aus Fig. 2 ohne die zum Rad 2 gehörigen Punkte. Fig. 3a zeigt daher denjenigen Teil der 3D-Punktwolke, der den das Rad 2 umgebenden Bereich der Karosserie 3 und insbesondere die dem Rad 2 zugewandte Unterkante K eines Radhauses (Radhausunterkante) repräsentiert. Fig. 3b zeigt einen vergrößerten Ausschnitt der 3D-Punktwolke, in dem die Punkte, welche die Radhausunterkante K repräsentieren, besonders gut zu erkennen sind.

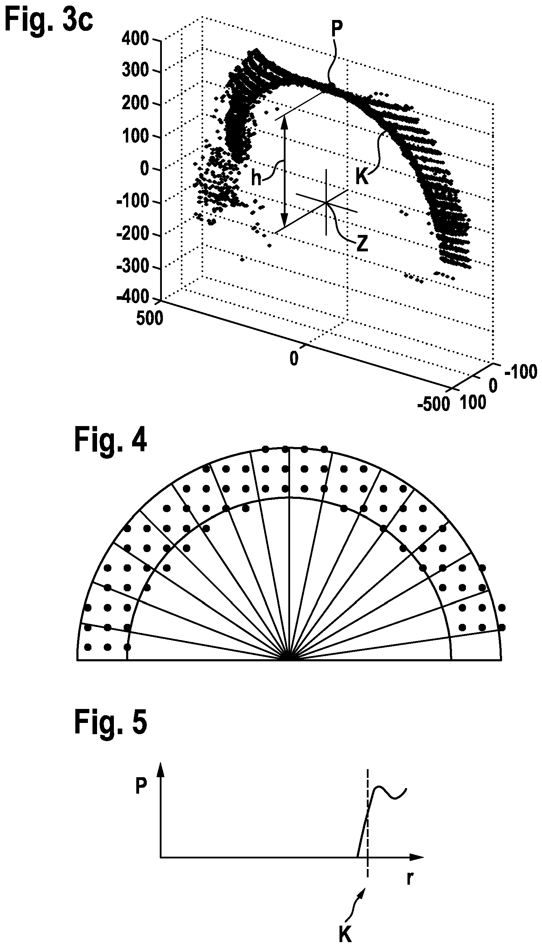

Durch Lokalisieren der Radhausunterkante K in der 3D-Punktwolke und Bestimmen des höchsten Punktes P der Radhausunterkante K (Fig. 3b) kann der Höhenstand h als vertikaler Abstand zwischen dem Punkt P und dem Raddrehzentrum Z einfach bestimmt werden (Fig. 3c).

Hierbei erfolgt eine Nutzung der 3D-Punktwolke, welche aus den Messungen mit strukturierter Beleuchtung zu einem oder mehreren Zeitpunkten ermittelt worden ist. Für die Bestimmung eines Punktes P auf der Karosserie, insb. der Radhausunterkante K, werden nach einem Klassifizierungsschritt nur die Punkte aus der 3D-Punktwolke verwendet, die als Karosseriepunkte erkannt wurden. Diese Erkennung erfolgt aufgrund der geometrischen 3D-Lage der Punkte oberhalb der Oberfläche des Reifens 6.

Bei einer hinreichenden Anzahl von 3D-Punkten auf der Karosserieoberfläche lässt sich die Radhausunterkante K direkt bestimmen.

Für die Bestimmung der Radhausunterkante K wird die 3D-Punktwolke ausgehend vom Raddrehzentrum Z in mehrere Winkelbereiche eingeteilt (Fig. 4). Für jeden Winkelbereich wird mit den verfügbaren Punkten ein Radhausunterkantenpunkt abgeleitet. Dazu werden innerhalb des Winkelbereiches die Häufigkeit P der 3D-Punkte in radialer Richtung als Funktion des Abstandes r vom Radzentrum Z aufgetragen (Fig. 5) und bspw. der Wendepunkt im ersten signifikanten Anstieg des Häufigkeitsverlaufs ermittelt. Dieser ermittelte Punkt K entspricht einem Punkt der Radhausunterkante K. Um einen stetigen Verlauf der Radhausunterkante K zu erreichen, empfiehlt es sich, die Winkelbereiche einander überlappend zu definieren.

Dadurch, dass sowohl das Raddrehzentrum Z als auch der Punkt P auf der Karosserie 3 durch Auswerten der 3D-Punktwolke bestimmt werden, ist der Höhenstand h mit hoher Genauigkeit zuverlässig bestimmbar. Eine Vorrichtung zur Durchführung des beschriebenen Verfahrens ist einfach und kostengünstig herstellbar, da das Raddrehzentrum Z und der Punkt P aus den gleichen Aufnahmen bestimmt werden; insbesondere ist zur Bestimmung des Punktes P auf der Karosserie 3 keine zusätzliche Beleuchtungseinrichtung zur Aufnahme von Grauwertbildern bei diffuser Beleuchtung erforderlich.

Für den Fall, dass mit dem zuvor beschriebenen Verfahren kein Punkt P auf der Karosserie 3 zur Ermittlung des Höhenstandes mit ausreichender Genauigkeit identifizierbar ist, z.B. weil die Karosserie 3 in der Umgebung des Rades 2 die Lichtpunkte der strukturierten Beleuchtung nicht ausreichend reflektiert, kann der Punkt P auf der Karosserie 3 auch durch Auswertung von bei unstrukturierter Beleuchtung aufgenommenen Grauwertbildern bestimmt werden.

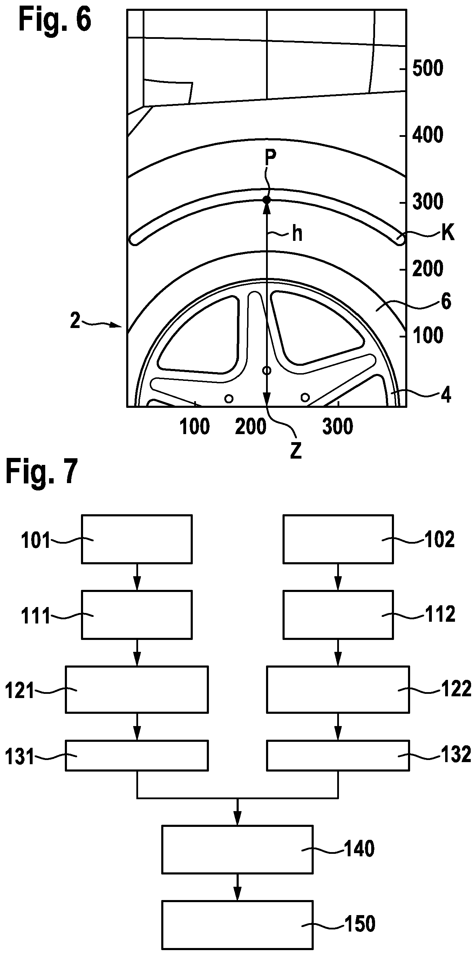

Fig. 6 zeigt schematisch ein Grauwertbild eines Rades 2 mit einer Felge 4 und einem die Felge 2 umgebenden Reifen 6 sowie einen das Rad 2 umgebenden Bereich der Karosserie 3, insbesondere des Radhauses, welches das Rad 2 umgibt. Grauwertbilder können mit den Sensoreinheiten 12, 13 oder alternativ mit einer (nicht gezeigten) auf die Aufnahme von Grauwertbildern spezialisierten Aufnahmeeinrichtung, wie z.B. einer kalibrierten (Stereo-)Kamera aufgenommen werden.

Das Raddrehzentrum Z ist bereits, wie zuvor beschrieben, aus der in den Fig. 3a bis 3c gezeigten 3D-Punktwolke des Rades 2 bestimmt worden. Die Radhausunterkante K wird aus wenigstens zwei Grauwertbildern, von denen ein Beispiel in der Figur 6 gezeigt ist, z.B. durch ein Kantenerkennungsverfahren oder einer Disparitätsmessung, bestimmt. Der Höhenstand h ergibt sich dann als vertikaler Abstand zwischen dem Raddrehzentrum Z und dem höchsten Punkt P der Radhausunterkante K.

Fig. 7 zeigt beispielhaft den Ablauf zur Bestimmung der Radhausunterkante unter Nutzung eines Stereo-Grauwertbildpaares 101, 102, welches mit zwei Kameras bzw. Sensoranordnungen 12, 13 aufgenommen worden ist.

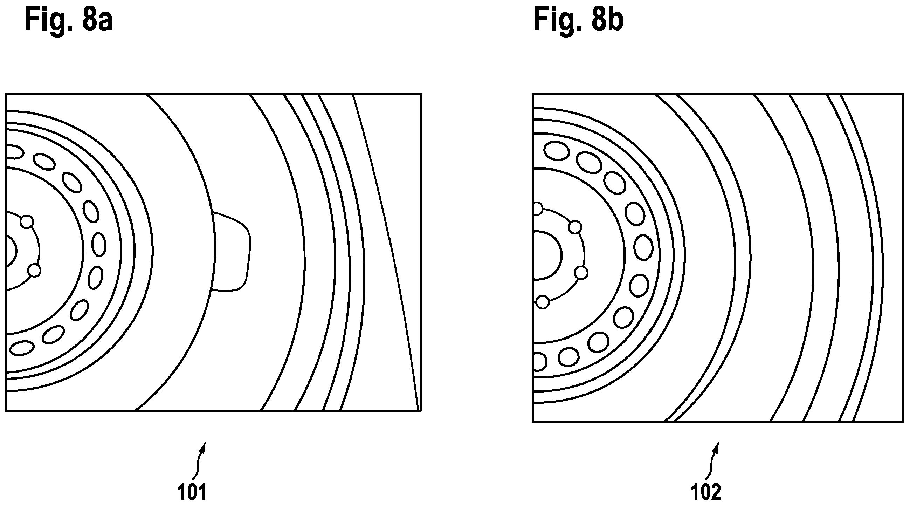

Für die Konturbestimmung wird jeweils ein Bildausschnitt ausgehend vom Raddrehzentrum Z in Richtung der Karosserie betrachtet 111, 112. Die Figuren 8a und 8b zeigen beispielhaft je einen Bildausschnitt der beiden Bilder eines Stereo-Grauwertbildpaares 101, 102. Die Position des Raddrehzentrums Z und der Radradius sind aus der Bestimmung des Raddrehzentrums Z aus den bei strukturierter Beleuchtung aufgenommen Bildern bekannt. Die Größe des Ausschnitts beträgt etwa den 1,5-fachen mal 2-fachen Radius des Rades 2. Die Kontur der Radhausunterkante K wird im betrachteten Bildausschnitt außerhalb des Radradius erwartet.

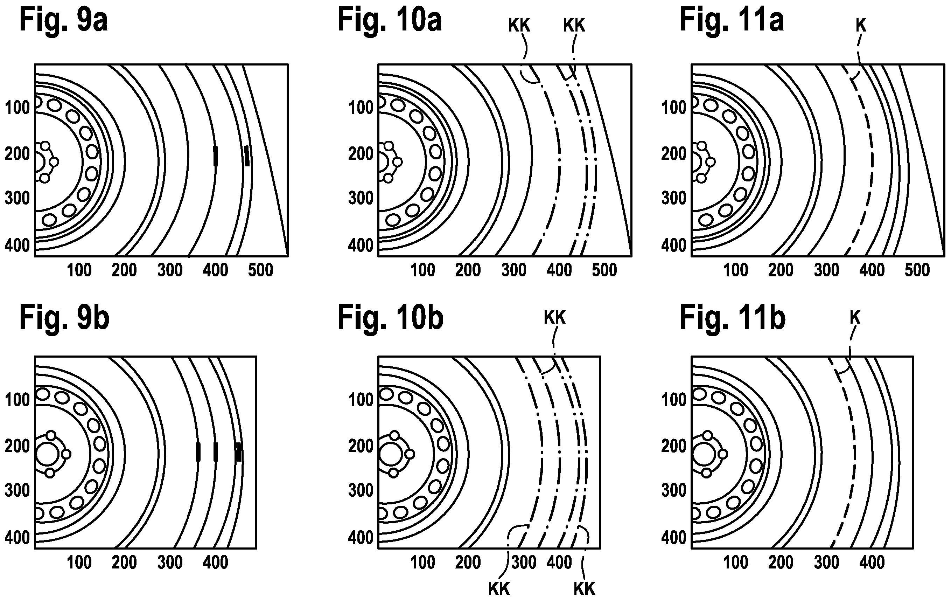

Zur Bestimmung der Kontur im 3D-Raum werden die Konturen zuerst im jeweiligen 2D-Grauwertbild 101, 102 detektiert (Schritte 121, 122). Dies erfolgt mit einem Kantenerkennungsverfahren, z.B. dem aus der Bildverarbeitung allgemein bekannten "Canny-Edge"-Operator. Ein Beispiel hierfür ist in den Figuren 9a und 9b gezeigt.

Zunächst erfolgt eine Vorauswahl 131, 132 geeigneter Grauwertkonturen. Dabei werden Konturen gesucht, die eine gewisse Länge überschreiten und in Richtung der erwarteten Radhausunterkante K verlaufen.

Im nächsten Schritt 140 (Abbildung 7) erfolgt eine Auswahl der Radhauskontur in den beiden Einzelbildern 101, 102. Die Aufgabe besteht darin, aus den in den beiden Bildern zuvor ermittelten Konturkanten KK, wie sie in den Figuren 10a und 10b gezeigt sind, diejenigen der Radhausunterkante K aufzuspüren und zuzuordnen.

Zur Beurteilung werden unterschiedliche Kriterien berücksichtigt. Die mögliche Zuordnung einer Kontur aus dem Grauwertbild 101 der ersten Sensoranordnung 12 zu einer Kontur aus dem Grauwertbild 102 der zweiten Sensoranordnung 13 wird in Form eines Kostenwertes $C_g$ bewertet.

Zuerst wird die lokale Güte beurteilt, indem Konturlängen der max. möglichen Konturlänge gegenübergestellt wird. Ein Konturenpaar aus langen Konturen ist höher einzustufen als ein Paar mit kurzen Konturlängen. Auch wird geprüft, ob die detektierte Kontur eine konvexe Krümmung aufweist. Es wird die Stärke der Kontur im Grauwertbild 101, 102 geprüft. Weiter wird die Disparität zwischen den Konturpositionen und auch die absolute Lage der Kontur in den Grauwertbildern 101, 102 beurteilt. Die Disparität muss in einem angegebenen Toleranzbereich liegen. Mit der absoluten Lage der Konturen wird die Nähe zum Rad bewertet. Liegt a priori Wissen zur absoluten Lage der Kontur vor, kann dieses in die Beurteilung der kandidierenden Konturpaare mit einfließen.

Die Gesamtkosten einer Zuordnung einer Kontur im Grauwertbild 101 zu einer Kontur im Grauwertbild 102 ergeben sich aus der Summe der mit Wichtungsfaktoren $w_i$ gewichteten Einzelkosten $c_i$.

$$C_g = \sum_{i=1}^{n} w_i c_i$$

Das Konturpaar mit den geringsten Kosten ($C_g^{min}$) entspricht dem konsistenten Konturpaar und wird als Kontur der Radhausunterkante K ausgewählt.

Mit Hilfe von Kalibrierungsdaten der Sensoreinheiten 12, 13 werden im Schritt 150 (Abbildung 7) die korrespondierenden Konturpunkte K (siehe Figuren 11a und 11b) in den 3D-Raum überführt. Ist die Lage und Form der Radhausunterkante K im 3D-Raum bekannt, lässt sich der Scheitelpunkt P als das lokale 3D-Maximum mit bekannten Methoden ermitteln.

Die Auswertung der Grauwertbilder 101, 102 stellt eine Variante des erfindungsgemäßen Verfahrens dar, die sich insbesondere in ungünstigen Beleuchtungssituationen und/oder bei einer schlecht reflektierenden Karosserie 3 als vorteilhaft erweist.

In einem weiteren Ausführungsbeispiel wird die Bestimmung der Punktes P aus den Grauwertbildern 101, 102 mit der Bestimmung aus der 3D-Punktwolke kombiniert und so die Robustheit und/oder Genauigkeit des Verfahrens noch weiter verbessert.

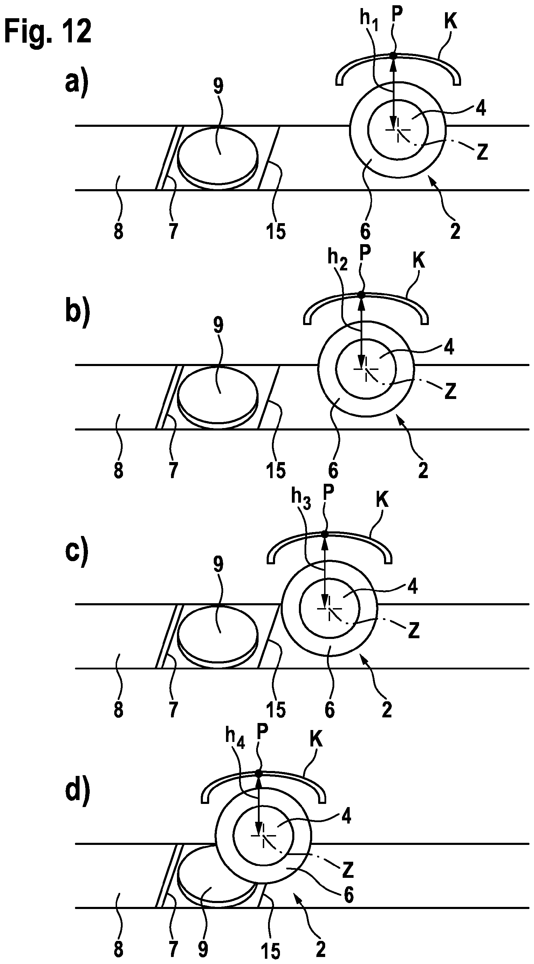

Die Figuren 12a bis 12d zeigen schematisch die Durchführung einer Höhenstandsmessung während des Einmessvorgangs, d.h. während das Fahrzeug 1 auf die Messstelle, die z.B. als Hebebühne mit Drehplatten 9 ausgebildet ist, gefahren wird.

In den Figuren 12a bis 12d ist schematisch eine in horizontaler Richtung verlaufende Spurschiene 8 gezeigt, auf der im links dargestellten Bereich zwischen Kanten 7 und 15 eine Drehplatte 9 eingelassen ist. Von dem zu vermessenden Fahrzeug 1 sind in der schematischen Darstellung den Figuren 12a bis 12d nur ein Rad 2 und eine Radhausunterkante K gezeigt.

Die Figuren 12a bis 12d zeigen in zeitlicher Abfolge, wie das (nicht gezeigte) Fahrzeug 1 bzw. das Rad 2 von rechts nach links über die Spurschiene 8 und die Kante 15 auf die Drehplatte 9 sowie ggf. über die Kante 7 gerollt wird. In der Praxis sind die Kanten 7, 15 oft mehr oder weniger stark ausgeprägte Höhenstufen.

Während der Bewegung des Fahrzeugs 1 bzw. des Rades 2 entlang der Spurschiene 8 wird das Rad 2 mit einer strukturierten und/oder unstrukturierten Beleuchtung beleuchtet und es werden zu verschiedenen Zeitpunkten jeweils wenigstens zwei Reflexionsbilder aufgenommen, aus denen das Radzentrum Z und die Radhausunterkante K nach einem der zuvor beschriebenen Verfahren bestimmt und der Höhenstand $h_t$, d.h. der vertikale Abstand zwischen dem Raddrehzentrum Z und dem höchsten Punkt P der Radhausunterkante K zu verschiedenen Zeitpunkten t ermittelt werden.

In einem Ausführungsbeispiel beträgt die Aufnahmefrequenz der Bildserie dabei mindestens 3 Hz, so dass bei einer Aufnahmezeit von 3 bis 4 Sekunden 9 bis 12 (Stereo-)Bilder für die Auswertung zur Verfügung stehen.

Die ermittelten Radzentren Z liegen bei einer ebenen Spurschiene 8 während der Bewegung in der Regel auf einer Geraden oder können auf eine solche approximiert werden. In diesem Fall sind die zu verschiedenen Zeitpunkten t ermittelten Höhestände $h_t$ (t=1,2,3) weitgehend gleich. Beim Überfahren eines Hindernisses, wie z.B. der Höhenstufe 15, wie sie vor der Drehplatte 9 in der Spurschiene 8 ausgebildet ist, und dem sich daraus ergebenden Einfedern des Fahrwerks verändert sich die Lage des Raddrehzentrums Z relativ zur Radhausunterkante K und damit auch der zu diesem Zeitpunkt gemessene Höhenstand $h_4$ (Fig. 12d). Ein solcher, während des Einfederns ermittelter Höhenstandswert $h_4$, der deutlich von den zuvor ermittelten Höhenstandswerten $h_1$ bis $h_3$ abweicht, kann als ungültig verworfen werden, um zu verhindern, dass er das Ergebnis der Messung verfälscht.

Wenn die Höhenstandsmessung während des Einmessvorgangs, d.h. während das Fahrzeug auf dem Messplatz gerollt wird, durchgeführt wird, kann der Höhenstand h bereits vor dem eigentlichen Messprozess zur Fahrwerksvermessung, der durchgeführt wird, nachdem das Rad 2 auf der Drehplatte 9 positioniert worden ist, bestimmt werden, so dass für den gesamten Messvorgang insgesamt weniger Zeit benötigt wird.

Die zu verschiedenen Zeitpunkten t ermittelten Höhenstände $h_t$, bei denen die Radzentren Z zumindest näherungsweise auf einer Geraden liegen, können statistisch ausgewertet werden; insbesondere kann die Genauigkeit des resultierenden Höhenstandes h durch Mittelwertbildung der einzelnen Höhenstandswerte $h_t$ über mehrere Bilder verbessert werden.

Höhenstandswerte $h_t$, die während des Einfederns, z.B. beim Überfahren eines Hindernisses oder einer Kante 7, 15 , ermittelt worden sind und die das Ergebnis verfälschen würden, können verworfen und von der Mittelwertbildung ausgenommen werden.

Der bei der Vorbeifahrt ermittelte Höhenstand kann gespeichert und zur weiteren Diagnose bei nachfolgenden Messungen bei stehendem Fahrzeug 1 herangezogen werden. Dies kann hilfreich sein, um fehlerhafte Messzustände zu erkennen. Beispielsweise, wenn sich während der Durchführung der Messung eine Person in das Fahrzeug 1 setzt.

**Patentansprüche**

1. Verfahren zum Bestimmen von Abständen zur Fahrwerksvermessung eines Fahrzeugs (1) mit einer Karosserie (3) und wenigstens einem Rad (2), insbesondere zum Bestimmen eines Höhenstands (h), umfassend:

    a) Projizieren eines strukturierten Lichtmusters zumindest auf das Rad (2) und einen das Rad (2) umgebenden Bereich der Karosserie (3);
    b) Aufnehmen eines von dem Rad (2) reflektierten Lichtmusters mit einer bildgebenden Sensorik (12, 13) für verschiedene Drehlagen des Rades (2);
    c) Bestimmen einer 3D-Punktwolke aus dem reflektierten Lichtmuster;

    **dadurch gekennzeichnet, dass** folgende weitere Schritte ausgeführt werden

    1) Bestimmen eines Raddrehzentrums (Z) des Rades (2) durch

        1a) Anpassen eines parametrischen Oberflächenmodells des Rades (2) an die 3D-Punktwolke für verschiedene Drehlagen des Rades (2);
        1b) Berechnen des Radnormalenvektors für die jeweilige Drehlage des Rades (2);
        1c) Berechnen der Drehachse (24) und damit des Raddrehzentrums (Z) aus der räumlichen Bewegung des Radnormalenvektors (22);

    2) Bestimmen eines Punktes (P) auf der Karosserie (3) durch Auswerten der zuvor bestimmten 3D-Punktwolke;
    3) Bestimmen des Höhenstandes (h) als vertikaler Abstand zwischen dem Raddrehzentrum (Z) und dem Punkt (P) auf der Karosserie (3).

2. Verfahren nach Anspruch 1, wobei der Schritt des Bestimmens eines Punktes (P) auf der Karosserie (3) durch Auswerten der 3D-Punktwolke das Lokalisieren einer Kante (K) der Karosserie (3) in der 3D-Punktwolke einschließt.

3. Verfahren nach Anspruch 2, wobei das Auswerten der 3D-Punktwolke einschließt, die 3D-Punktwolke ausgehend vom Raddrehzentrum (Z) in Winkelbereiche zu unterteilen.

4. Verfahren zum Bestimmen von Abständen zur Fahrwerksvermessung eines Fahrzeugs (1) mit einer Karosserie (3) und wenigstens einem Rad (2), insbesondere zum Bestimmen eines Höhenstands (h), umfassend:

    a) Projizieren eines strukturierten Lichtmusters zumindest auf das Rad (2),
    b) Aufnehmen eines von dem Rad (2) reflektierten Lichtmusters mit einer bildgebenden Sensorik (12, 13),
    c) Bestimmen einer 3D-Punktwolke aus dem reflektierten Lichtmuster,

    **dadurch gekennzeichnet, dass** folgende weitere Schritte ausgeführt werden:

    1) Bestimmen eines Raddrehzentrums (Z) des Rades (2) durch:

        1a) Anpassen eines parametrischen Oberflächenmodells des Rades (2) an die 3D-Punktwolke für verschiedene Drehlagen des Rades (2);
        1b) Berechnen des Radnormalenvektors für die jeweilige Drehlage des Rades (2);
        1c) Berechnen der Drehachse (24) und damit des Raddrehzentrums (Z) aus der räumlichen Bewegung des Radnormalenvektors (22);

    2) Bestimmen eines Punktes (P) auf der Karosserie (3) durch:

        2a) Beleuchten des Fahrzeugs (1) mit einer unstrukturierte Beleuchtung,
        2b) Vorbeifahren des beleuchteten Fahrzeugs (1) an einer Anordnung mit wenigsten zwei bildgebenden Sensoren (12, 13);
        2c) Aufnehmen einer Anzahl von Grauwertbildern (101, 102) während der Vorbeifahrt des Fahrzeugs (1) an den bildgebenden Sensoren (12, 13);

2d) Bestimmen eines Punktes (P) auf der Karosserie (3) durch Auswerten der Grauwertbilder (101, 102);

3) Bestimmen des Höhenstandes (h) als vertikaler Abstand zwischen dem Raddrehzentrum (Z) und dem Punkt (P) auf der Karosserie (3).

5. Verfahren nach Anspruch 4, wobei die Bestimmung des Höhenstandes (h) die Mittlung einer Anzahl von Höhenständen ($h_t$) einschließt, die aus mehreren Grauwertbildern (101, 102) bestimmt worden sind.

6. Verfahren nach Anspruch 4 oder 5, wobei die Auswertung der Grauwertbilder (101, 102) eine Kantenerkennung z.B. mit einem Canny-Edge-Filter, eine Stereo-Korrespondenzzuordnung der Kanten, 3D-Triangulation und eine Klassifikation einer Radhausunterkante (K) in den 3D-Konturen einschließt.

7. Verfahren nach Anspruch 6, wobei die Auswertung der Grauwertbilder (101, 102) eine Disparitätsmessung mittels Stereo-Verfahren, die Erzeugung einer 3D-Punktwolke aus der Disparitätsmessung und eine Klassifikation der Radhausunterkante (K) einschließt.

8. Verfahren nach einem der Ansprüche 1 bis 3, wobei zusätzlich eine Bestimmung eines Punktes (P) auf der Karosserie (3) durch die Auswertung von wenigstens zwei Grauwertbildern (101, 102) nach einem der Ansprüche 4 bis 7 durchgeführt wird, wobei die Bestimmung eines Punktes (P) auf der Karosserie (K) durch die Auswertung von wenigstens zwei Grauwertbildern (101, 102) vorzugsweise nur dann durchgeführt wird, wenn durch Auswerten der bei strukturierten Beleuchtung aufgenommenen 3D-Punktwolke ein Punkt (P) auf der Karosserie (3) nicht mit ausreichender Genauigkeit bestimmbar ist.

9. Vorrichtung zum Bestimmen von Abständen zur Fahrwerksvermessung eines Fahrzeugs (1) mit einer Karosserie (3) und wenigstens einem Rad (2), insbesondere zum Bestimmen eines Höhenstands (h), umfassend:

a) wenigstens einen Projektor (11), der eingerichtet ist, ein strukturiertes Lichtmuster auf wenigstens ein Rad (2) des Fahrzeugs (1) und einen das Rad (2) umgebenden Bereich der Karosserie (3) zu projizieren;
b) wenigstens eine bildgebende Sensorik (12, 13), die ausgebildet ist, um ein von dem Rad (2) und dem das Rad (2) umgebenden Bereich der Karosserie (3) reflektiertes Lichtmuster aufzunehmen; und
c) wenigstens eine Auswerteinheit (14), die ausgebildet ist, um

c1) aus dem reflektierten Lichtmuster eine 3D-Punktwolke zu bestimmen,
c2) ein parametrisches Oberflächenmodell des Rades (2) an die 3D-Punktwolke anzupassen,
c3) den jeweiligen Radnormalenvektor für verschiedene Drehlagen des Rades (2) zu bestimmen,

**dadurch gekennzeichnet, dass** die wenigstens eine Auswerteinheit (14), dazu ausgebildet ist, um

1) die Drehachse (24) und damit das Raddrehzentrum (Z) aus der räumlichen Bewegung des Radnormalenvektors (22) zu berechnen;
2) durch Auswerten der 3D-Punktwolke einen Punkt (P) auf der Karosserie (3) zu bestimmen; und
3) den Höhenstand (h) als vertikalen Abstand zwischen dem Raddrehzentrum (Z) und dem Punkt (P) auf der Karosserie (3) zu bestimmen.

10. Vorrichtung zum Bestimmen von Abständen zur Fahrwerksvermessung eines Fahrzeugs (1) mit einer Karosserie (3) und wenigstens einem Rad (2), insbesondere zum Bestimmen eines Höhenstands (h), umfassend:

a) wenigstens einen Projektor (11), der eingerichtet ist, ein strukturiertes Lichtmuster auf wenigstens ein Rad (2) des Fahrzeugs (1) und einen das Rad (2) umgebenden Bereich der Karosserie (3) zu projizieren;
b) wenigstens eine bildgebende Sensorik (12, 13), die ausgebildet ist, um ein von dem Rad (2) und dem das Rad (2) umgebenden Bereich der Karosserie (3) reflektiertes Lichtmuster aufzunehmen; und
c) wenigstens eine Bildaufnahmevorrichtung (12, 13), die ausgebildet ist, um während einer Vorbeifahrt des Fahrzeugs (1) an der Bildaufnahmevorrichtung (12, 13) eine Anzahl von Grauwertbildern (101, 102) aufzunehmen;
d) wenigstens eine Auswerteinheit (14), die ausgebildet ist,

d1) aus dem reflektierten Lichtmuster eine 3D-Punktwolke zu bestimmen,
d2) ein parametrisches Oberflächenmodell des Rades (2) an die 3D-Punktwolke anzupassen,
d3) den jeweiligen Radnormalenvektor für verschiedene Drehlagen des Rades (2) zu bestimmen, **dadurch gekennzeichnet, dass** die Auswerteeinheit dazu ausgebildet ist,

1) die Drehachse (24) und damit das Raddrehzentrum (Z) aus der räumlichen Bewegung des Radnormalenvektors (22) zu berechnen;

2) durch Auswerten der Grauwertbilder (101, 102) wenigstens einen Punkt (P) auf der Karosserie (3) zu bestimmen; und

3) den Höhenstand (h) als vertikalen Abstand zwischen dem Raddrehzentrum (Z) und dem Punkt (P) auf der Karosserie (3) zu bestimmen.

**Claims**

1. A method of determining distances for chassis measurement of a vehicle (1) having a body (3) and at least one wheel (2), in particular for determining a height level (h), said method comprising:

   a) projecting a structured light pattern at least onto the wheel (2) and a region of the body (3) surrounding the wheel (2);

   b) recording a light pattern reflected from the wheel (2) by means of an imaging sensor system (12, 13) for different rotational positions of the wheel (2);

   c) determining a 3D point cloud from the reflected light pattern; **characterised in that** the following additional steps are carried out:

   1) determining a wheel rotational centre (Z) of the wheel (2) by

      1a) matching a parametric surface model of the wheel (2) to the 3D point cloud for different rotational positions of the wheel (2);

      1b) calculating the wheel normal vector for the respective rotational position of the wheel (2);

      1c) calculating the axis of rotation (24) and thus the wheel rotational centre (Z) from the spatial movement of the wheel normal vector (22);

   2) determining a point (P) on the body (3) by evaluating the previously determined 3D point cloud;

   3) determining the height dimension (h) as a vertical distance between the wheel rotational centre (Z) and the point (P) on the body (3).

2. The method of claim 1,
   wherein the step of determining a point (P) on the body (3) by evaluating the 3D point cloud includes locating an edge (K) of the body (3) in the 3D point cloud.

3. The method of claim 2,
   wherein evaluating of the 3D point cloud includes dividing the 3D point cloud from the wheel rotation centre (Z) into angular ranges.

4. A method of determining distances for chassis measurement of a vehicle (1) having a body (3) and at least one wheel (2), in particular for determining a height level (h), said method comprising:

   a) projecting a structured light pattern at least onto the wheel (2),

   b) recording a light pattern reflected from the wheel (2) by means of an imaging sensor system (12, 13),

   c) determining a 3D point cloud from the reflected light pattern, **characterised in that** the following additional steps are carried out:

   1) determining a wheel rotational centre (Z) of the wheel (2) by:

      1a) matching a parametric surface model of the wheel (2) to the 3D point cloud for different rotational positions of the wheel (2);

      1b) calculating the wheel normal vector for the respective rotational position of the wheel (2);

      1c) calculating the axis of rotation (24) and thus the wheel rotational centre (Z) from the spatial movement of the wheel normal vector (22);

   2) determining a point (P) on the body (3) by:

      2a) illuminating the vehicle (1) with unstructured illumination,

      2b) driving the illuminated vehicle (1) past an arrangement having at least two imaging sensors (12, 13);

      2c) taking a number of gray-value images (101, 102) during the passage of the vehicle (1) past the imaging sensors (12, 13);

      2d) determining a point (P) on the body (3) by evaluating the gray-value images (101, 102);

   3) determining the height dimension (h) as a vertical distance between the wheel rotational centre (Z) and the point (P) on the body (3).

5. The method of claim 4,
wherein the determination of the height dimension (h) includes averaging of a number of height levels ($h_t$) determined from a plurality of gray-value images (101, 102).

6. The method of claim 4 or 5,
wherein the evaluation of the gray-value images (101, 102) comprises edge detection e.g. by means of a Canny edge filter, stereo correspondence mapping of the edges, 3D triangulation, and a classification of a wheelhouse bottom edge (K) in the 3D contours.

7. The method of claim 6,
wherein the evaluation of the gray-value images (101, 102) includes a disparity measurement by means of stereo methods, the generation of a 3D point cloud from the disparity measurement and a classification of the wheelhouse bottom edge (K).

8. The method of any of claims 1 to 3,
wherein a determination of a point (P) on the body (3) by evaluation of at least two gray-value images (101, 102) according to any of claims 4 to 7 is carried in addition, wherein the determination of a point (P) on the body (K) by evaluation of at least two gray-value images (101, 102) is preferably carried out only when a point (P) on the body (3) cannot be determined with sufficient accuracy by evaluating the 3D point cloud recorded in structured illumination.

9. A device for determining distances for chassis measurement of a vehicle (1) having a body (3) and at least one wheel (2), in particular for determining a height level (h), comprising:

a) at least one projector (11) which is arranged to project a structured light pattern onto at least one wheel (2) of the vehicle (1) and a region of the body (3) surrounding the wheel (2);
b) at least one imaging sensor system (12, 13) which is adapted to record a light pattern reflected from the wheel (2) and the region of the body (3) surrounding the wheel (2); and
c) at least one evaluation unit (14) which is adapted

c1) to determine a 3D point cloud from the reflected light pattern,
c2) to match a parametric surface model of the wheel (2) to the 3D point cloud,
c3) to determine the respective wheel normal vector for different rotational positions of the wheel (2),

**characterised in that** the at least one evaluation unit (14) is adapted

1) to calculate the axis of rotation (24) and thus the wheel rotational centre (Z) from the spatial movement of the wheel normal vector (22);
2) to determine a point (P) on the body (3) by evaluating the 3D point cloud; and
3) to determine the height level (h) as the vertical distance between the wheel rotational centre (Z) and the point (P) on the body (3).

10. A device for determining distances for chassis measurement of a vehicle (1) having a body (3) and at least one wheel (2), in particular for determining a height level (h), comprising:

a) at least one projector (11) which is arranged to project a structured light pattern onto at least one wheel (2) of the vehicle (1) and a region of the body (3) surrounding the wheel (2);
b) at least one imaging sensor system (12, 13) which is adapted to record a light pattern reflected from the wheel (2) and the region of the body (3) surrounding the wheel (2); and
c) at least one image recording device (12, 13) which is adapted to take up a number of gray-value images (101, 102) while the vehicle (1) passes the image recording device (12, 13);
d) at least one evaluation unit (14) which is adapted

d1) to determine a 3D point cloud from the reflected light pattern,
d2) to match a parametric surface model of the wheel (2) to the 3D point cloud,
d3) to determine the respective wheel normal vector for different rotational positions of the wheel (2),

**characterised in that** the evaluation unit is adapted

1) to calculate the axis of rotation (24) and thus the wheel rotational centre (Z) from the spatial movement of the wheel normal vector (22);
2) to determine at least one point (P) on the body (3) by evaluation of the gray-value images (101, 102); and
3) to determine the height level (h) as the vertical distance between the wheel rotational centre (Z) and the point (P) on the body (3).

**Revendications**

1. Procédé pour la détermination d'écarts à des fins de mesure de la géométrie d'un véhicule (1) comprenant une carrosserie (3) et au moins une roue (2), en particulier pour la détermination d'une hauteur (h), comprenant le fait de :

a) projeter un motif lumineux structuré au moins sur la roue (2) et sur une zone de la carrosserie (3) entourant la roue (2) ;

b) enregistrer un motif lumineux réfléchi par la roue (2) avec un système de détection formateur d'images (12, 13) pour différentes positions de rotation de la roue (2) ;

c) déterminer un nuage de points en trois dimensions à partir du motif lumineux réfléchi ;

**caractérisé en ce que** les étapes supplémentaires suivantes sont mises en oeuvre, à savoir :

1) le fait de déterminer un centre de rotation de la roue (Z) à savoir la roue (2) via :

1a) l'adaptation d'un modèle surfacique paramétrique de la roue (2) au nuage de points en trois dimensions pour différentes positions de rotation de la roue (2) ;

1b) le calcul du vecteur normal de la roue pour la position de rotation respective de la roue (2) ;

1c) le calcul de l'axe de rotation (24), partant le centre de rotation de la roue (Z) à partir du déplacement dans l'espace du vecteur normal de la roue (22) ;

2) le fait de déterminer un point (P) sur la carrosserie (3) via l'évaluation du nuage de points en trois dimensions déterminé au préalable ;

3) le fait de déterminer la hauteur (h) sous la forme de la distance verticale entre le centre de rotation de la roue (Z) et le point (P) sur la carrosserie (3).

**2.** Procédé selon la revendication 1, dans lequel l'étape consistant à déterminer un point (P) sur la carrosserie (3) via une évaluation du nuage de points en trois dimensions inclut la localisation d'un bord (K) de la carrosserie (3) dans le nuage de points en trois dimensions.

**3.** Procédé selon la revendication 2, dans lequel l'évaluation du nuage de points en trois dimensions inclut la subdivision en secteurs angulaires du nuage de points en trois dimensions à partir du centre de rotation de la roue (Z).

**4.** Procédé pour la détermination d'écarts à des fins de mesure de la géométrie d'un véhicule (1) comprenant une carrosserie (3) et au moins une roue (2), en particulier pour la détermination d'une hauteur (h), comprenant le fait de :

a) projeter un motif lumineux structuré au moins sur la roue (2) ;

b) enregistrer un motif lumineux réfléchi par la roue (2) avec un système de détection formateur d'images (12, 13) ;

c) déterminer un nuage de points en trois dimensions à partir du motif lumineux réfléchi ;

**caractérisé en ce que** les étapes supplémentaires suivantes sont mises en oeuvre, à savoir :

1) le fait de déterminer un centre de rotation de la roue (Z) à savoir la roue (2) via :

1a) l'adaptation d'un modèle surfacique paramétrique de la roue (2) au nuage de points en trois dimensions pour différentes positions de rotation de la roue (2) ;

1b) le calcul du vecteur normal de la roue pour la position de rotation respective de la roue (2) ;

1c) le calcul de l'axe de rotation (24), partant du centre de rotation de la roue (Z) à partir du déplacement dans l'espace du vecteur normal de la roue (22) ;

2) le fait de déterminer un point (P) sur la carrosserie (3) via :

2a) l'éclairage du véhicule (1) avec un éclairage non structuré ;

2b) le passage du véhicule éclairé (1) le long d'un agencement comprenant au moins deux capteurs formateurs d'images (12, 13) ;

2c) l'enregistrement d'un certain nombre d'images en demi-teinte (101, 102) au cours du passage du véhicule (1) le long des capteurs formateurs d'images (12, 13) ;

2d) la détermination d'un point (P) sur la carrosserie (3) via l'évaluation des images en demi-teinte (101, 102) ;

3) le fait de déterminer la hauteur (h) sous la forme de la distance verticale entre le centre de rotation de la roue (Z) et le point (P) sur la carrosserie (3).

**5.** Procédé selon la revendication 4, dans lequel la détermination de la hauteur (h) inclut le calcul de la moyenne d'un certain nombre de hauteurs ($h_t$) qui ont été déterminées à partir de plusieurs images en demi-teinte (101, 102).

**6.** Procédé selon la revendication 4 ou 5, dans lequel l'évaluation des images en demi-teinte (101, 102) inclut une identification des contours, par exemple avec un filtre de Canny, une mise en correspondance stéréo des contours, une triangulation en trois dimensions et une classification du bord inférieur du logement de roue (K) dans les contours en trois dimensions.

7. Procédé selon la revendication 6, dans lequel l'évaluation des images en demi-teinte (101, 102) inclut une mesure de la disparité au moyen d'un procédé stéréo, la génération d'un nuage de points en trois dimensions à partir de la mesure de la disparité et une classification du bord inférieur du logement de roue (K).

8. Procédé selon l'une quelconque des revendications 1 à 3, dans lequel on met en outre en oeuvre une détermination d'un point (P) sur la carrosserie (3) via l'évaluation d'au moins deux images en demi-teinte (101, 102) selon l'une quelconque des revendications 4 à 7 ; dans lequel la détermination d'un point (P) sur la carrosserie (K) est mise en oeuvre via l'évaluation d'au moins deux images en demi-teinte (101, 102), de préférence uniquement lorsque, via l'évaluation du nuage de points en trois dimensions enregistré dans des conditions d'éclairage structuré, un point (P) sur la carrosserie (3) ne peut pas être déterminé avec une précision suffisante.

9. Dispositif pour la détermination d'écarts à des fins de mesure de la géométrie d'un véhicule (1) comprenant une carrosserie (3) et au moins une roue (2), en particulier pour la détermination d'une hauteur (h), comprenant :

   a) au moins un projecteur (11) qui est conçu pour projeter un motif lumineux structuré sur au moins une roue (2) du véhicule (1) et sur une zone de la carrosserie (3) entourant la roue (2) ;
   b) au moins un système de détection formateur d'images (12, 13) qui est réalisé pour enregistrer un motif lumineux réfléchi par la roue (2) et par la zone de la carrosserie (3) entourant la roue (2) ; et
   c) au moins une unité d'évaluation (14) qui est réalisée pour :

      c1) déterminer, à partir du motif lumineux réfléchi, un nuage de points en trois dimensions ;
      c2) adapter un modèle surfacique paramétrique de la roue (2) au nuage de points en trois dimensions ;
      c3) déterminer le vecteur normal respectif de la roue pour différentes positions de rotation de la roue (2) ;

   **caractérisé en ce que** ladite au moins une unité d'évaluation (14) est réalisée pour :

      1) calculer l'axe de rotation (24), partant le centre de rotation de la roue (Z) à partir du déplacement dans l'espace du vecteur normal de la roue (22) ;
      2) déterminer, via l'évaluation du nuage de points en trois dimensions un point (P) sur la carrosserie (3) ; et
      3) déterminer la hauteur (h) sous la forme de la distance verticale entre le centre de rotation de la roue (Z) et le point (P) sur la carrosserie (3).

10. Dispositif pour la détermination d'écarts à des fins de mesure de la géométrie d'un véhicule (1) comprenant une carrosserie (3) et au moins une roue (2), en particulier pour la détermination d'une hauteur (h), comprenant :

    a) au moins un projecteur (11) qui est conçu pour projeter un motif lumineux structuré sur au moins une roue (2) du véhicule (1) et sur une zone de la carrosserie (3) entourant la roue (2) ;
    b) au moins un système de détection formateur d'images (12, 13) qui est réalisé pour enregistrer un motif lumineux réfléchi par la roue (2) et par la zone de la carrosserie (3) entourant la roue (2) ; et
    c) au moins un dispositif d'enregistrement d'images (12, 13) qui est réalisé pour enregistrer au cours d'un passage du véhicule (1) le long du dispositif d'enregistrement d'images (12, 13) un certain nombre d'images en demi-teinte (101, 102) ;
    d) au moins une unité d'évaluation (14) qui est réalisée pour :

       d1) déterminer, à partir du motif lumineux réfléchi, un nuage de points en trois dimensions ;
       d2) adapter un modèle surfacique paramétrique de la roue (2) au nuage de points en trois dimensions ;
       d3) déterminer le vecteur normal respectif de la roue pour différentes positions de rotation de la roue (2) ;

    **caractérisé en ce que** l'unité d'évaluation est réalisée pour :

       1) calculer l'axe de rotation (24), partant le centre de rotation de la roue (Z) à partir du déplacement dans l'espace du vecteur normal de la roue (22) ;
       2) déterminer, via l'évaluation des images en demi-teinte (101, 102), au moins un point (P) sur la carrosserie (3) ; et
       3) déterminer la hauteur (h) sous la forme de la distance verticale entre le centre de rotation de la roue (Z) et le point (P) sur la carrosserie (3).

# Fig. 1

# Fig. 2

## Fig. 3a

## Fig. 3b

EP 2 539 117 B1

**Fig. 3c**

**Fig. 4**

**Fig. 5**

**Fig. 6**

**Fig. 7**

**Fig. 8a**

101

**Fig. 8b**

102

EP 2 539 117 B1

# Fig. 12

EP 2 539 117 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004013441
- WO 2008028832 A1

- WO 2008046715 A1